# EUROPEAN PATENT SPECIFICATION

(11) **EP 3 920 349 B1**
(45) Date of publication and mention of the grant of the patent: **29.07.2026**
(21) Application number: 19913911.4
(22) Date of filing: 04.03.2019
(51) Int. Cl.: H02B 1/21, H01R 25/14

(54) **EASILY INSTALLABLE ASSEMBLY-TYPE DISTRIBUTION BOARD**
LEICHT INSTALLIERBARER BAUGRUPPENARTIGER VERTEILER
TABLEAU DE DISTRIBUTION DU TYPE À ASSEMBLER FACILE À INSTALLER

(30) Priority: 31.01.2019 KR 20190012884
(43) Date of publication of application: 08.12.2021
(73) Proprietor: Ecopowertech Co., Ltd., Jeju-si, Jeju-do 63304 (KR)
(72) Inventor: SONG, Ki Taek, Jeju-si Jeju-do 63104 (KR); KIM, Gyeong Tak, Jeju-si Jeju-do 63146 (KR)
(74) Representative: González López-Menchero, Álvaro Luis
(86) International application number: PCT/KR2019/002458
(87) International publication number: WO 2020/158993

(56) References cited:
- JP-A- 2015 167 453
- JP-A- H11 332 035
- KR-A- 20120 045 704
- KR-B1- 100 942 605
- KR-B1- 101 024 727
- KR-B1- 101 024 727
- KR-B1- 101 886 116
- KR-B1- 101 886 116
- US-A- 3 354 357
- US-A- 4 517 623
- GDELECS: "Distribution board assembly and maintenance", 16 December 2016 (2016-12-16), XP055953475, Retrieved from the Internet <URL:https://www.youtube.com/watch?v=65XvFvjin1s> [retrieved on 20220822]

## Description

### Technical Field

The present invention relates to a modular panelboard, and more particularly, the present invention relates to a modular panelboard, wherein just by inserting main busbars stacked vertically into a busbar stacking connector, the electric power of respective phases passing through a main circuit breaker is delivered to each of the main busbars, thereby enabling the modular panelboard to be easily installed, preventing an accident and a breakdown caused by internal overheating of the busbar stacking connector and a connective connector, and enabling the main busbars and branch busbars to be more stably fixed.

### Background Art

In general, a panelboard or a switchboard is equipped with a circuit breaker, a switch, and others in an enclosure thereof to selectively distribute electric power supplied from the power supply to each position of the circuit breaker or the switch.

A main circuit breaker and an individual circuit breaker are provided in the panelboard to selectively control the power supplied to the panelboard and the power supplied to each load. The power passing through the main circuit breaker is divided into R-S-T-N phase to supply to the main busbars 100 provided in the vertical direction. The main busbars 100 are connected to the branch busbars 200 provided in the horizontal direction to supply the power of respective phases to the individual circuit breakers 400.

At this time, as shown in the following patent document (see FIG. 1), the connection between the main busbar 100 and the branch busbar 200 is provided such that the branch busbar 200 is made to be bent and the main busbar 100 and the branch busbar 200 are coupled to each other by fastening the bolt 300. Accordingly, a manufacturing process of the branch busbar 200 is complicated, and even when working, each branch busbar 200 must be fastened to the main busbar 100 by the bolt 300. Therefore, there is a problem in that the manufacturing process is very troublesome and a risk of a safety accident becomes high. Documents of Related Art
(Patent Document) Korean Patent No. 10-1256157 (registered on April, 12, 2013) "LINE COUPLING EQUIPMENT BUSBAR AND METHOD FOR COUPLING"
In the state of the art are known the following documents:
∘ US 3 354 357 A, which discloses an electrical panelboard.
∘ KR 101 024 727 81 which discloses a diverging connector kit for industrial power distribution board and industrial power distribution board having the diverging connector kit Gdelecs "Distribution board assembly and maintenance", 16 December 2016 (2016-12-16),
∘ KR 100 942 605 81 which discloses an assembly power distribution board
o KR 101 886 116 81 which discloses a lever type busbar connection kit of power distribution board capable of uninterrupted replacement

KR20120045704A discloses a particular connective connector for a distribution panel.

### Disclosure

### Technical Problem

The present invention has been made to solve the above problems, and an objective of the present invention is to provide a modular panelboard, wherein just by inserting main busbars stacked parallel into a busbar stacking connector, the power of respective phases passing through a main circuit breaker is delivered to each of the main busbars, thereby enabling the modular panelboard to be easily installed, according to the set of claims

Another objective of the present invention is to provide the modular panelboard capable of avoiding an accident and a breakdown caused by internal overheating.

Also, yet another objective of the present invention is to provide the modular panelboard enabling the main busbars and the branch busbars to be more stably fixed.

### Technical Solution

The present invention is implemented by a modular panelboard according to claim 1.

According to another exemplary embodiment of the present invention, in the modular panelboard enabling the easy installation thereof according to the present invention, the busbar stacking connector may include: busbar stacking bars connected to the power of respective phases passing through the main circuit breaker and lined up in a vertical direction; and a connector body providing an outer shape of the busbar stacking connector and accommodating the busbar stacking bars therein, wherein the busbar stacking bars may include: connecting plates provided in respective layers in horizontal directions and configured to be in contact with the main busbars; bent members connecting the connecting plates to the power of respective phases of the main circuit breaker; and busbar fixing ribs pressing and fixing the main busbars in contact with the connecting plates by elasticity, and the bent members connected to the power of respective phases may have different heights so as to protrude from the connector body, the bent members being spaced apart from each other in a horizontal direction at a same height and connected to different points of the connecting plates.

According to yet another exemplary embodiment of the present invention, in the modular panelboard enabling the easy installation thereof according to the present invention, the connector body may include: protrusion holes through which the bent members protrude toward the main circuit breaker; insertion holes through which the main busbars are inserted in the connector body; and a vent part formed through the connector body to discharge heat from the connector body to an outside.

According to still another exemplary embodiment of the present invention, in the modular panelboard enabling the easy installation thereof according to the present invention, the busbar part may include busbar fixing modules provided at ends of the main busbars stacked vertically to fix the main busbars, and the busbar fixing modules may include: stacking members in which the main busbars stacked vertically are seated and fixed, the stacking members being stacked vertically by the number of main busbars; and a stacking cover covering an uppermost stacking member, at an upper side, among the stacking members stacked vertically.

According to still another exemplary embodiment of the present invention, in the modular panelboard enabling the easy installation thereof according to the present invention, each of the stacking members may include: a seating groove recessed downward so that an associated main busbar is seated therein; a fixing protrusion protruding upward from a point on the seating groove and being inserted into a fastening hole of the main busbar; a coupling protrusion protruding upward from each of both ends of the stacking member; an insertion groove into which an engaging protrusion of the stacking member at a lower side is inserted; and a through-hole formed through the coupling protrusion and the insertion groove so that a fixing means is fastened thereto.

According to still another exemplary embodiment of the present invention, in the modular panelboard enabling the easy installation thereof according to the present invention, the busbar fixing modules may be additionally provided in close contact with the busbar stacking connector.

According to still another exemplary embodiment of the present invention, in the modular panelboard enabling the easy installation thereof according to the present invention, the stacking cover may include a protruding end protruding from a top end of the stacking cover toward the busbar stacking connector, and the busbar stacking connector may be provided at a top end thereof with a recessed groove in which the protruding end is closely seated.

According to still another exemplary embodiment of the present invention, in the modular panelboard enabling the easy installation thereof according to the present invention, the connecting main body may include a vent part configured to discharge heat from the connecting main body to an outside.

According to still another exemplary embodiment of the present invention, in the modular panelboard enabling the easy installation thereof according to the present invention, the vent part may include: a vent hole formed through a side wall of the connector body or the connecting main body; a blocking plate provided to face the vent hole inside the connector body or the connecting main body so as to block the vent hole; and an inner groove recessed to a predetermined depth from an inside of the connector body or the connecting main body to an outside, and provided to communicate with the vent hole at an upper side or a lower side of the vent hole.

### Advantageous Effects

The present invention may achieve the following effects by a configuration, combination, and use relationship described above with the present exemplary embodiment.

The present invention has an effect, wherein just by inserting main busbars stacked vertically into a busbar stacking connector, the power of respective phases passing through a main circuit breaker is delivered to each of the main busbars, thereby enabling the modular panelboard to be easily installed.

The present invention has an effect of avoiding an accident and a breakdown caused by internal overheating.

The present invention has an effect of enabling the main busbars to be stably fixed and easily installed by separately providing a busbar fixing module.

The present invention has an effect of enabling the branch busbars, inserted in a connector, to be more stably fixed.

### Description of Drawings

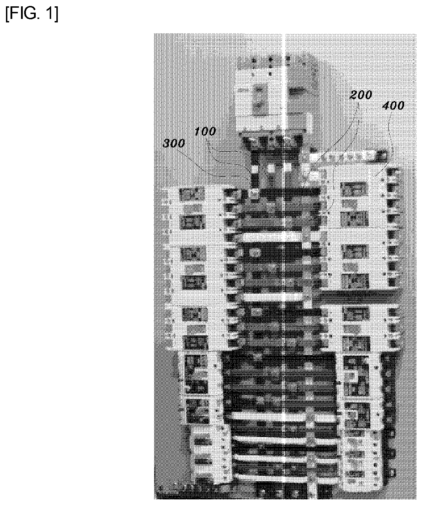

FIG. 1 is a reference diagram illustrating a busbar connection state of a conventional panelboard.
FIG. 2 is a perspective view of a modular panelboard according to an exemplary embodiment of the present invention.
FIG. 3 is an exploded perspective view of the modular panelboard according to the exemplary embodiment of the present invention.
FIG. 4 is a perspective view of the busbar stacking connector of FIG. 3.
FIG. 5 is an exploded perspective view of FIG. 4.
FIG. 6 is a perspective view illustrating each shape of the busbar stacking bar of FIG. 5.
FIG. 7 is a cross-sectional view illustrating a state in which the main busbar is inserted into the busbar stacking connector.
FIG. 8 is a cross-sectional view taken along the line A-A of FIG. 4.
FIG. 9 is an exploded perspective view of a busbar fixing module of FIG. 3.
FIG. 10 is a perspective view of the connective connector of FIG. 3.
FIG. 11 is a cross-sectional view illustrating a state where the main busbars are inserted into the connective connector of FIG. 10.
FIG. 12 is a side view (A), and a cross-sectional view (B) taken along the line B-B, of the connector.
FIG. 13 is a cross-sectional view illustrating the connective connector according to another exemplary embodiment of the present invention.
FIG. 14 is a perspective view of the modular panelboard according to yet another exemplary embodiment of the present invention.
FIG. 15 is a cross-sectional view of an installation state of the busbar stacking connector and the busbar fixing module of FIG. 14.

### <Description of the Reference Numerals in the Drawings>

1: busbar part 11: main busbar 111: fastening hole 13: busbar stacking connector
131: busbar stacking bar 131a: connecting plate 131b: bent member
131c: busbar fixing rib 131c-1: rounded bent part 131c-2: open bent part
131c-3: fixing means 133: connector body 133a: protrusion hole 133b: insertion hole
133c: fixing stopper 133d: vent part 133d-1: vent hole
133d-2: blocking plate 133d-3: inner groove 133e: bottom fixing wing
133f: recessed groove 15,15': busbar fixing module 151: stacking member
151a: seating groove 151b: fixing protrusion 151c: engaging protrusion 151d: insertion groove
151e: through-hole 153: stacking cover 153a: insertion groove 153b: through-hole
153c: protruding end
3,3': connective connector 31: connecting main body 311: busbar insertion part
313: fixing stopper 315: vent part 315a: vent hole 315b: blocking plate
315c: inner groove 33: branch busbar 35: fixing rib
351: rounded bent part 353: open bent part 355: fixing means
37: pressure fixing part 371: insertion ball 373: fixing groove 375: receiving groove
M: main circuit breaker T: individual circuit breaker

### Best Mode

Hereinafter, with reference to the accompanying drawings, practical exemplary embodiments of a modular panelboard capable of an easy installation thereof according to the present invention will be described in detail. In the following description of the present invention, it is to be noted that, when a detailed description of a known function or configuration may unnecessarily obscure the subject matter of the present invention, the detailed description thereof will be omitted. Throughout the description, when a part is said to "include" or "comprise" a certain component, it means that it may further include or comprise other components and not exclude other components unless the context clearly indicates otherwise.

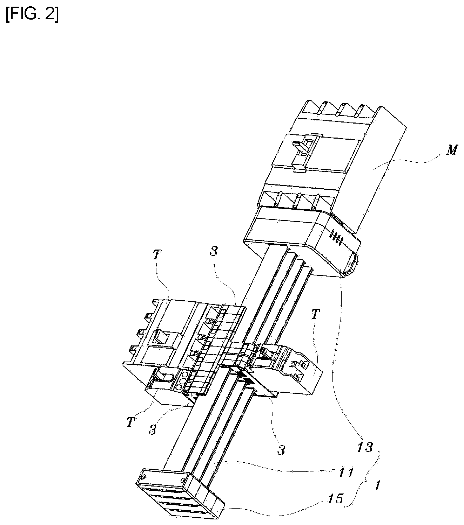

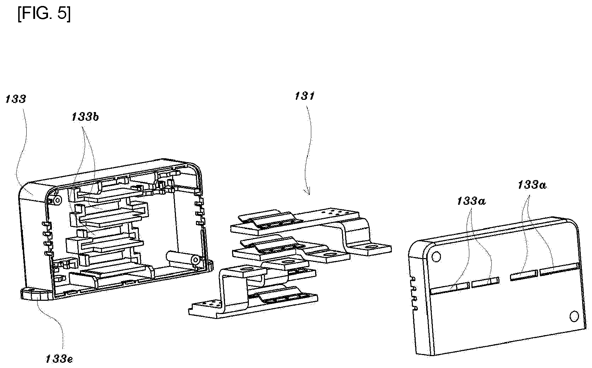

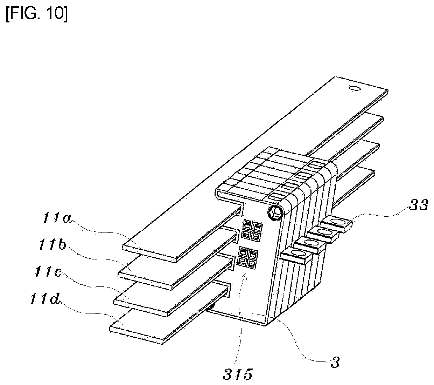

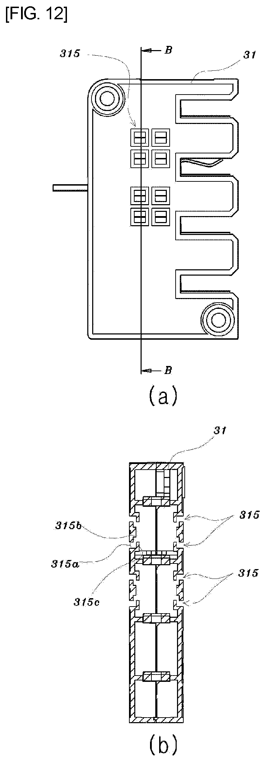

Referring to FIGS. 2 to 12, according to the exemplary embodiment of the present invention, the modular panelboard enabling an easy installation will be described. The modular panelboard includes: a busbar part 1 provided by stacking main busbars 11, supplying the power of respective phases, parallel; and a connective connector 3 configured to provide a plurality of spaces in which the main busbars 11 of respective phases are inserted, and to bring branch busbars 33 into contact with the main busbars 11 inserted in the spaces, thereby connecting the main busbars to individual circuit breakers T.

The modular panelboard according to the present invention may be capable of being completely fixed just by respectively inserting the main busbars 11 and the branch busbars 33 connecting between the main circuit breaker M and the individual circuit breakers T into the busbar stacking connector 13 and the connective connector 3, whereby quick and safe installation of the modular panelboard may be achieved. In addition, the modular panelboard is provided with fixing stoppers 133c and 313 for the stable fixing of the main busbars 11 and the branch busbars 33, and the modular panelboard is provided with vent parts 133d and 315 separately in order to effectively discharge the heat generated in the busbar stacking connector 13 and the connective connector 3.

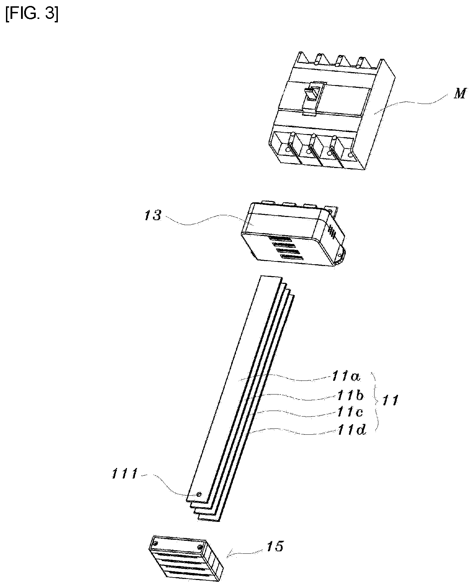

The busbar part 1 is configured to enable the power of the R, S, T, and N phases passing through the main circuit breaker M to be transmitted to each main busbar 11 vertically stacked. The main busbars 11 that are vertically stacked are connected to the connective connector 3 so that the power of respective phases may be supplied to the individual circuit breakers T. At this time, the main circuit breaker M is generally exposed to the outside spaced apart in the horizontal direction, as shown in FIG. 3. The present invention allows the power of respective phases in the horizontal direction to be connected to each of the main busbars 11 that are vertically stacked through the busbar stacking connector 13, so that the connective connector 3 is easily inserted and fastened. In particular, the busbar stacking connector 13 enables the main busbars 11 to be fixed, without additional work, just by inserting the main busbars 11 to perform quicker and easier installation of the modular panelboard. In addition, a busbar fixing module 15 is further provided at the end of the main busbars 11 that are vertically stacked to enable the main busbars 11 to be more stably fixed. The busbar fixing module 15 is provided in a stacked manner, so that the busbar fixing module 15 may also be provided in a quick and easy way. Therefore, the busbar part 1 may include the main busbars 11, the busbar stacking connector 13, and the busbar fixing module 15.

The main busbars 11 are vertically stacked to transmit the power of respective phases, and may be provided in the form of a long metal plate so that the power of the R-S-T-N phase may be transmitted to each main busbar 11a, 11b, 11c, or 11d. The main busbars 11 are inserted into the busbar stacking connector 13 in a vertically lined up state, and are fixed in contact with the busbar stacking bar 131 with the insertion, and are connected to the main circuit breaker M. In addition, on both sides of the main busbar 11, the connective connector 3 is coupled and fixed as shown in FIG. 2, so that a connection with the individual circuit breakers T may be made, and the busbar fixing module 15 may be additionally provided at lower ends of the main busbars 11 so that the main busbars 11 may be stably fixed. The main busbar 11 may have a fastening hole 111 penetrating the stacked main busbars parallel at the ends of the main busbars, and a fixing protrusion 151b to be described later of the busbar fixing module 15 may be inserted and fixed. Accordingly, the main busbars 11 are inserted into the busbar stacking connector 13 so as to be fixed, and are also fixed to each of stacking members 151 of the busbar fixing module 15 so that the stacking members 151 are stacked, whereby the installation of the main busbars 11 may be completed easily.

**The** busbar stacking connector 13 is configured to connect the main circuit breaker M and the main busbars 11, and the power of respective phases output spaced apart in the horizontal direction from the main circuit breaker M may be connected to each of the main busbars 11 that are vertically stacked. **In** addition, the main busbars 11 inserted into the busbar stacking connector 13 may be fixed together with the insertion. **It** is desirable that the main busbars 11 may be inserted, while spaced apart at a predetermined interval, in a vertically lined up state. **To** this end, the busbar stacking connector 13 may include the busbar stacking bar 131 connecting to the main busbars 11 and the main circuit breaker **M,** and the connector body 133 which accommodates the busbar stacking bar 131 and forms an exterior of the busbar stacking connector 13.

**The** busbar stacking bar 131 has a configuration in which the power of respective phases output from the main circuit breaker M is connected to each main busbar 11 stacked vertically. **The** power of respective phases output spaced apart in the horizontal direction is transmitted to each main busbar 11 stacked in a vertically lined up state. **Thus,** the busbar stacking bar 131 may transmit the power of respective phases in the horizontal direction to each main busbar 11 stacked in the vertical direction by a unique structure including a connecting plate 131a, a bent member 131b, and a busbar fixing rib 131c. Also, the busbar stacking bar 131 may enable the main busbars 11 inserted into the busbar stacking connector 13 to be fixed by the unique structure.

**The** connecting plate 131a is configured to be in contact with the main busbar 11 of each layer. In order to be able to transmit the power of respective phases spaced apart at regular intervals in the horizontal direction output from the main circuit breaker M to the main busbars 11 stacked in a vertical direction, the connecting plates 131a in contact with main busbars 11a, 11b, 11c, and 11d are provided to have different widths. Accordingly, the main busbars 11 may be stacked in a line in contact with the connecting plates 131a at the center of the busbar stacking connector 13. Also, the connecting plate 131a is provided with the bent member 131b to be connected to the power of respective phases spaced apart at regular intervals in the horizontal direction output from the main circuit breaker M.

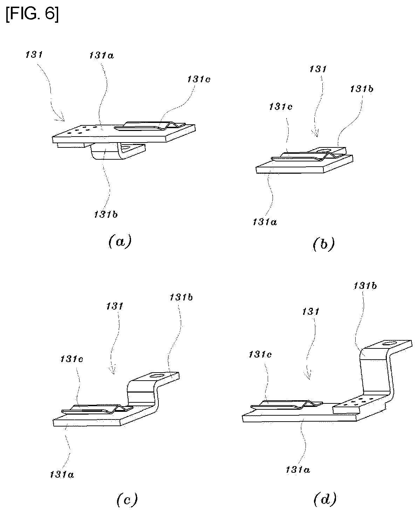

The bent member 131b is configured to connect the power of respective phases to each connecting plate 131a and the main circuit breaker M, and is provided at a height corresponding to a position at which the power of respective phases is output from the main circuit breaker M. In general, in the main circuit breaker M, the power of respective phases is output to the outside at the same height. In order to allow the connecting plates 131a to come into contact with the main busbars 11 stacked at different heights, as shown in FIG. 6, the bent members 131b are to be provided in different heights by respective phases of the power, and the points and directions in contact with the connecting plates 131a are also provided to be different from each other. In addition, the bent member 131b may be separately manufactured and attached to the connecting plate 131a, or may be integrally manufactured with the connecting plate 131a. Therefore, in contact with the connecting plate 131a, the bent member 131b protrudes toward the rear side of the connector body 133 through a protrusion hole 133a, to be described later, of the connector body 133, and is fixed in contact with a part of the main circuit breaker M where the power of respective phases is output.

The busbar fixing rib 131c is configured to fix the main busbar 11 inserted into the connector body 133 and in contact with the connecting plate 131a, and is fixed by the elasticity of the busbar fixing rib 131c itself. The busbar fixing rib 131c may be provided in a plate shape of iron having constant rigidity, and is coupled to the upper side of the connecting plate 131a to enable the main busbar 11 to be inserted between the connecting plate 131a and the busbar fixing rib 131c. **In** addition, the busbar fixing rib 131c includes a rounded bent part 131c-1 at a point to increase pressing force on the main busbar 11, and also includes an open bent part 131c-2 that is bent upwards to be open at the end thereof, thereby facilitating the insertion of the main busbar 11 and enabling the busbar fixing rib 131c to be fixed to the connecting plate 131a by a fixing means 131c-3.

The rounded bent part 131c-1 is configured to be bent to protrude in an upward direction at a point of the busbar fixing rib 131c, and presses the main busbar 11 more firmly, which is inserted downward, by a force to maintain its outer shape of the rounded bent part 131c-1.

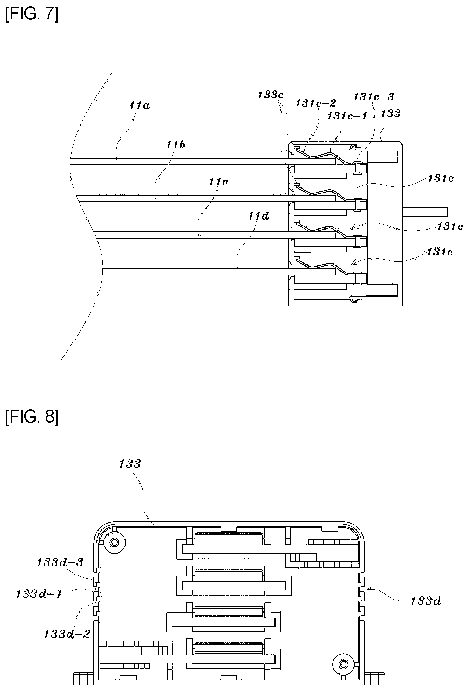

The open bent part 131c-2 is configured to be bent upward from an end of the busbar fixing rib 131c into which the main busbar 11 is inserted, and the main busbar 11 may be easily inserted through the space between the open bent part 131c-2 and the connecting plate 131a. In addition, the open bent part 131c-2 may be blocked by the fixing stopper 133c, as shown in FIG. 7, to increase the fixing force on the main busbar 11.

The fixing means 131c-3 is configured to fix the busbar fixing rib 131c to the connecting plate 131a. The fixing means 131c-3 may be provided on the opposite end of the open bent part 131c-2, and may be made to be coupled by a bolt, nut, and the like.

The connector body 133 is configured to accommodate the busbar stacking bar 131 therein and to form an outer shape of the busbar stacking connector 13. The main busbars 11 are inserted into one side of the connector body 133, and the bent members 131b protrude from an opposite side of the connector body 133 so as to be connected to the main circuit breaker M. The connector body 133 may be kept in a closed state to block the contact with the outside and to prevent the inflow of foreign substances from the outside, but the connector body 133 may also be configured to separately provide the vent part 133d in order to discharge the heat generated therein to the outside. Inside the connector body 133, the fixing stopper 133c is provided to increase the fixing force to the main busbar 11. The connector body 133 may be fixed to the floor through a bottom fixing wing 133e. To this end, the connector body 133 may include the protrusion hole 133a, an insertion hole 133b, the fixing stopper 133c, the vent part 133d, and the bottom fixing wing 133e.

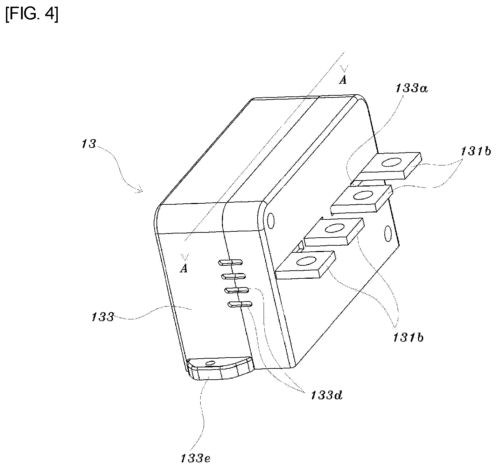

The protrusion holes 133a are configured to penetrate the rear side of the connector body 133 to enable the bent members 131b to be protruded outward, and the protrusion holes 133a, as shown in FIG. 4, are provided at the same height as the height of the bent members 131b so that the bent members 131b may be connected to the power of respective phases at the same height output from the main circuit breaker M.

The insertion hole 133b are configured to penetrate the front surface of the connector body 133 so that the main busbars 11 may be inserted therein, and may be spaced apart at regular intervals in the vertical direction to be provided by the number of main busbars 11.

The fixing stopper 133c is provided inside the connector body 133 and, more precisely, in the space into which the main busbar 11 is inserted to block the rising of the open bent part 131c-2. The fixing stoppers 133c are provided at positions above the space into which the main busbars 11 are inserted, as shown in FIG. 7. Accordingly, when the main busbar 11 is inserted between the connecting plate 131a and the busbar fixing rib 131c, the open bent part 131c-2 is prevented from rising any further, whereby the main busbar 11 is pressed more firmly to be fixed.

The vent part 133d is configured to discharge the heat inside the connector body 133 to the outside, and as shown in FIG. 8, a unique structure prevents an inflow of dust and the like from the outside and enables merely the heat inside to be discharged to the outside. Since the inside of the connector body 133 is a place where high-voltage power is transmitted through the contact between the connecting plates 131a and the main busbars 11, a large amount of heat is generated. Therefore, foreign substances introduced may cause electric and fire accidents due to the occurrence of arcs. Therefore, the vent part 133d enables merely the heat to be discharged to the outside through the unique structure. The vent part 133d may be provided at both sides of the connector body 133, and may include a vent hole 133d-1, a blocking plate 133d-2, and an inner groove 133d-3.

The vent holes 133d-1 are provided to penetrate the side surface of the connector body 133 to form passages through which heat is discharged. However, the vent holes 133d-1 are blocked by the blocking plates 133d-2 inside the connector body 133, so that the vent holes 133d-1 are blocked from being directly connected to the inside of the connector body 133. Therefore, foreign substances passing through the vent holes 133d-1 are blocked by the blocking plates 133d-2. However, the vent holes 133d-1 may be in communication with the inner grooves 133d-3 at the upper side and the heat in the connector body 133 may be discharged to the outside through the inner grooves 133d-3 and the vent holes 133d-1.

The blocking plate 133d-2 is a plate of a predetermined area coupled to the inner surface of the connector body 133, and is provided at a position opposite to the vent hole 133d-1. The blocking plate 133d-2 prevents foreign substances from entering directly inside the connector body 133 through the vent hole 133d-1. When foreign substances flowing in the air are also blocked by the blocking plate 133d-2, since the foreign substances are settled downward, it is difficult for the foreign substances to pass the blocking plate 133d-2, thereby blocking the foreign substances from entering inside the connector body 133.

The inner groove 133d-3 is configured to be embedded in a predetermined depth in the inner surface of the connector body 133, and is provided on the upper side of the blocking plate 133d-2, and also communicates with the vent hole 133d-1 positioned below the inner groove 133d-3. Therefore, while the foreign substances are blocked, by the blocking plate 133d-2, from flowing into the inside, the heat inside may be discharged to the outside through the inner groove 133d-3 and the vent hole 133d-1.

The bottom fixing wings 133e are provided at an outer lower end of the connector body 133 so as to be fixed to a floor, preferably a predetermined plate, a wall, and the like, on which the panelboard is provided.

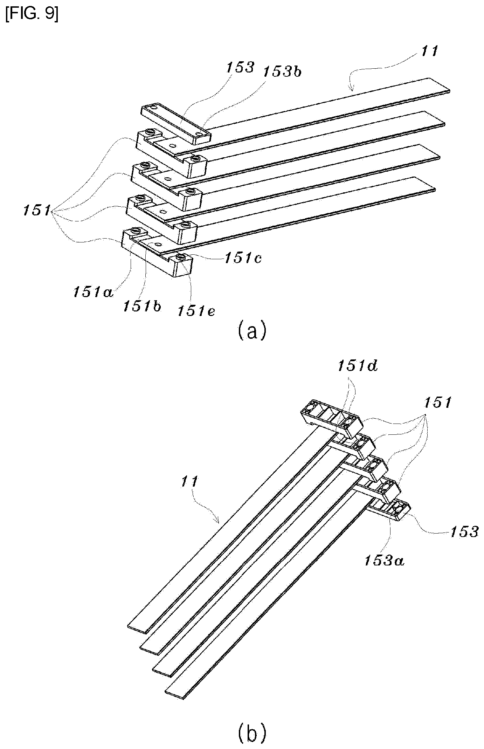

The busbar fixing module 15 is configured to additionally fix the main busbars 11 inserted into the busbar stacking connector 13, and may be provided to be stacked on the opposite side of the busbar stacking connector 13. The busbar fixing module 15 may include the stacking members 151 to which main busbars 11 are seated and fixed as shown in FIG. 9. The busbar fixing module 15 may be provided in such a manner where one main busbar 11 is fixed to each stacking member 151 so as to be stacked. Also, at the top end, the busbar fixing module 15 may be covered by a stacking cover 153.

The stacking member 151 has a configuration in which the main busbar 11 is seated and fixed, and is provided by the number of the main busbars 11 so as to be stacked and coupled. The stacking member 151 may include a seating groove 151a indented downward to a predetermined depth at the upper part of the stacking member 151 to enable the main busbar 11 to be seated. Also, the fixing protrusion 151b is provided to protrude from the seating groove 151a to be inserted into a fastening hole 111 of the main busbar 11. Accordingly, the main busbar 11 may be seated on the stacking member 151 to maintain a fixed state. In addition, a coupling protrusion 151c is provided to protrude from each of both ends of the stacking member 151, and may be inserted into an insertion groove 151d of yet another stacking member 151 stacked on the upper side, whereby the stacking members 151 may be easily stacked. A through-hole 151e is provided through the coupling protrusion 151c and the insertion groove 151d to be coupled to each other by a separate fixing means (not shown). Also, the busbar fixing module 15 may also be fixed to a separate member on the floor. Therefore, in the stacking members 151, the main busbar 11 positioned at the bottom is seated first on the stacking member 151 to be fixed, and in turn, the main busbar 11 is stacked on each stacking member 151 so as to enable the stacking members 151 to be stacked. Thereby, the stacking cover 153 covers the stacking member 151 to be fixed at the top end.

The stacking cover 153 is configured to be coupled at the top end of the stacking members 151, and includes an insertion groove 153a in the lower part thereof so that the coupling protrusion 151c of the uppermost stacking members 151 may be inserted therein. Also, a through-hole 153b is provided on the insertion groove 153a to enable the through-hole 151e of the stacking member 151 to communicate with the through-hole 153b.

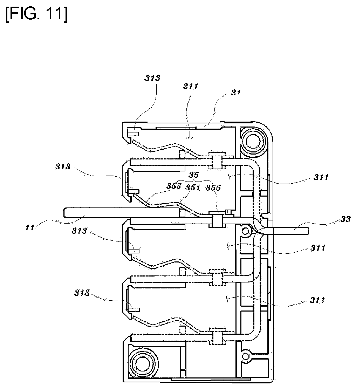

The connective connector 3 is configured to be coupled to each of both sides of the main busbars 11 so that the power of respective phases is supplied to the individual circuit breaker T, and a plurality of connective connectors 3 are combined to complete one connective connector 3 capable of supplying the power of multiple phases to the individual circuit breakers T. The connective connector 3 may include a plurality of busbar insertion parts 311 as shown in FIG. 11 to enable the main busbars 11 of respective phases to be inserted therein. Also, the branch busbar 33 is inserted into one of the busbar insertion parts 311 to be connected to the individual circuit breaker T. In addition, the connective connector 3 may be fixed without additional work just by inserting the main busbars 11, thereby enabling a quick and easy installation of the connective connector 3. To this end, the connective connector 3 includes: the connecting main body 31 inserting the main busbars 11 into the plurality of spaces spaced apart at regular intervals parallel; the branch busbar 33 inserted into the connecting main body 31 to be fixed, the branch busbar 33 having one end of which is exposed to one of the spaces in which the main busbar 11 is inserted, in order to be in contact with the main busbar 11, and the other end connected to the individual circuit breaker T; and a fixing rib 35 provided to face the branch busbar 33 so as to fixedly press the main busbar 11 being inserted therein.

The connecting main body 31 is configured to form an outer shape of the connective connector 3, and is provided as an insulator and forms a space in which the main busbar 11 is inserted to one side, in order to be coupled to the main busbar 11. In addition, the fixing stopper 313 is provided on the upper side of the space where the main busbar 11 is inserted to stop the rising of an open bent part 353, to be described later, and to enable the heat inside to be discharged to the outside. To this end, the connecting main body 31 may include the busbar insertion part 311, the fixing stopper 313, and the vent part 315.

The busbar insertion part 311 is configured to be open at one side of the connecting main body 31 to provide spaces into which the main busbars 11 are inserted, and is provided by the number of the corresponding main busbars 11. Also, it is desirable that four busbar insertion parts 311 corresponding to R, S, T, and N phases of the power may be provided. Accordingly, one of the four busbar insertion parts 311 is provided with the branch busbar 33 to be in contact with one of the main busbar 11 for supplying power on the R-S-T-N phase. By connecting such a connecting main body 31 , one connective connector 3 is to be provided. Preferably, by combining the four connecting main bodies 31 having the branch busbars 33 inserted into the busbar insertion parts 311, one connective connector 3 is provided, whereby the power of the R-S-T-N phases may be supplied to the individual circuit breakers T. Furthermore, the connective connector 3 may be provided by combining a multiple of the connecting main body 31 to supply the power of various phases such as R-S-T, R-N, and T-N.

The fixing stopper 313 is provided to protrude to the inside of each busbar insertion part 311 to block the rising of the open bent part 353. Therefore, the fixing stopper 313 may be provided on the upper part of an inlet side into which the main busbar 11 is inserted, and the rising of the open bent part 353 may be blocked so as to increase the pressing force of the fixing rib 35 with respect to the main busbar 11.

The vent part 315 is configured to discharge the heat in the connecting main body 31 to the outside, and as the vent part 133d of the connector body 133, the vent part 315 may include a vent holes 315a, a blocking plate 315b, an inner groove 315c, and the detailed description thereof has been described with reference to the vent part 133d. However, the vent part 315 has the inner groove 315c provided at a lower side of the vent hole 315a to form a pair with the inner groove 315c provided at an upper side of the vent hole 315a. Thus, the heat may be discharged more efficiently.

**The** branch busbar 33 is inserted and fixed in the connecting main body 31, and one end thereof is exposed to the busbar insertion part 311 and in contact with the main busbar 11. Also, an opposite end of the branch busbar 33 is exposed to the opposite side of the busbar insertion part 311 to be connected to the individual circuit breaker T. **The** branch busbar 33 is bent at one point so that one end is exposed to one of the busbar insertion part 311, and the opposite end is connected to the individual circuit breaker T at the same height.

**The** fixing rib 35 is configured to fix the main busbar 11 inserted into the busbar insertion part 311 in contact with the branch busbar 33, and preferably the fixing rib 35 is to be formed of an iron plate having a certain rigidity. **The** fixing rib 35 is fixed to the upper side of the branch busbar 33, and presses and fixes the main busbar 11 inserted between the fixing rib 35 and the branch busbar 33. The fixing rib 35 includes a rounded bent part 351 that is bent to protrude upward from a point to increase the pressing force on the main busbar 11. Also, the fixing rib 35 includes the open bent part 353 that is bent upward at the end of the main busbar 11 into which the main busbar 11 is inserted so that the main busbar 11 may be easily inserted. The fixing rib 35 is fixed to the branch busbar 33 by a fixing means 355. The description of the rounded bent part 351, the open bent part 353, and the fixing means 355 is the same as that described above with the busbar fixing rib 131c. In addition, when the main busbar 11 is inserted, the open bent part 353 may be blocked by the fixing stopper 313 so as to increase the fixing force to the main busbar 11.

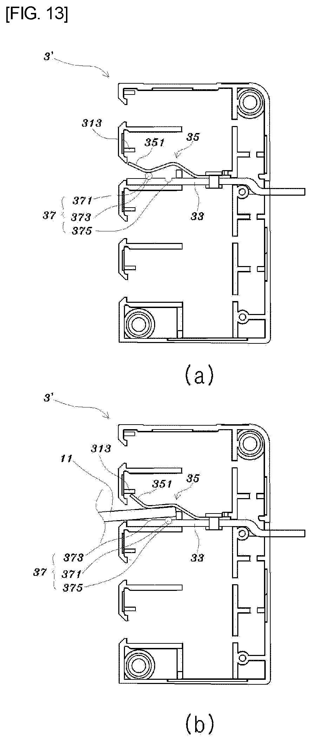

Referring to FIG. 13 for a connective connector 3' according to another exemplary embodiment of the present invention, the connective connector 3' further includes a pressure fixing part 37.

As in the one exemplary embodiment, the connective connector 3' includes the connecting main body 31, the branch busbar 33, and the fixing rib 35, and is fixed simply by inserting the main busbar 11. However, by further including the pressure fixing part 37, the connective connector 3' may enable the main busbar 11 to be more stably fixed.

The pressure fixing part 37 is configured to increase the pressing force of the main busbar 11 and the fixing rib 35, and may include an insertion ball 371, a fixing groove 373, and a receiving groove 375.

The insertion ball 371 is configured to be inserted between the fixing rib 35 and the branch busbar 33, and is preferably formed of a circular insulator. Also, the insertion ball 371 is inserted into the inlet side of the busbar insertion part 311. The insertion ball 371 is pushed by the main busbar 11 being inserted into the busbar insertion part 311 and inserted into the receiving groove 375. Also, in the state inserted into the receiving groove 375, the insertion ball 371 pushes the main busbar 11 upward in the state of being inserted into the receiving groove 375 to increase the pressing force of the fixing rib 35 and the main busbar 11. In addition, before the main busbar 11 is inserted, the insertion ball 371 is seated and inserted in the fixing groove 373. Here, the insertion ball 371 may be inserted in a state where the gap between the open bent part 353 and the branch busbar 33 is widened. The fixing rib 35 weakens the force to maintain the bent state of the rounded bent part 351 with repeated use or over time, so the open bent part 353 may be lowered downwards. In this case, there is a problem in that the fixing force of the fixing rib 35 is weakened, the main busbar 11 is caught by the fixing rib 35 and thus may not be inserted into the busbar insertion part 311, and the main busbar 11 may be inserted into the upper side of the fixing rib 35 so that the main busbar 11 may not come into contact with the branch busbar 33. Therefore, the insertion ball 371 may widen the interval between the fixing rib 35 and the branch busbar 33, and more precisely, may widen the interval between the open bent part 353 and the branch busbar 33, and thus the insertion ball 371 may enable the main busbar 11 to be inserted accurately and easily, even when the fixing rib 35 is lowered.

The fixing groove 373 is configured to be embedded in a predetermined depth at an upper side of the branch busbar 33, and the insertion ball 371 is seated and fixed before the main busbar 11 is inserted. As shown in FIG. 13A, the fixing groove 373 pushes the fixing rib 35 upward while the insertion ball 371 is seated so that the open bent part 353 may be opened upward.

The receiving groove 375 is configured to receive the insertion ball 371 after the main busbar 11 is inserted, and is provided to be embedded on the branch busbar 33 to a depth that the insertion ball 371 may protrude upward. Therefore, as shown in FIG. 13 (B), the insertion ball 371 received in the receiving groove 375 may push the main busbar 11 upward after the main busbar 11 is inserted, whereby the pressing force by the fixing rib 35 may be increased. Therefore, the pressure fixing part 37 may enable the main busbar 11 to be stably fixed and to be accurately and easily inserted.

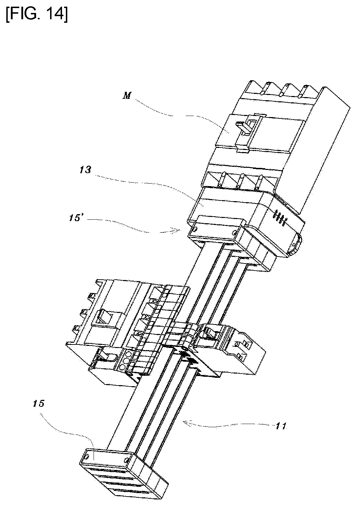

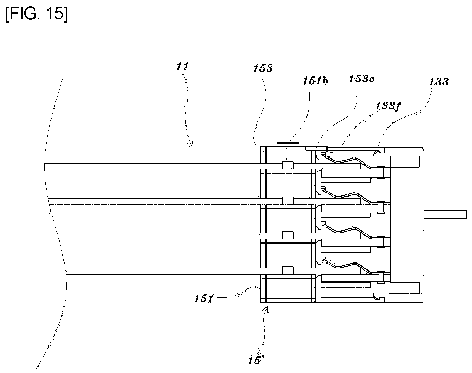

Referring to FIG. 14 and 15, the modular panelboard that may be easily installed according to yet another exemplary embodiment of the present invention, the modular panelboard additionally enables a busbar fixing module 15' to be inserted to bring into close contact with the busbar stacking connector 13.

In the main busbars 11 that are stacked vertically, one side thereof is inserted into and fixed to the busbar stacking connector 13, and the opposite side is fixed by the busbar fixing module 15. In the process of installing the connective connector 3 and the individual circuit breaker **T,** there is a fear that the main busbar 11 inserted into the busbar stacking connector 13 is separated therefrom. Therefore, the modular panelboard enables the busbar stacking connector 13 to further insert the busbar fixing module 15' to make the busbar to be more stably fixed, and the busbar fixing module 15' may be brought into close contact with the busbar stacking connector 13, thereby effectively preventing the main busbar 11 from being separated from the busbar stacking connector 13.

As in the case of the busbar fixing module 15 of the one exemplary embodiment, the busbar fixing module 15' includes the stacking member 151 and the stacking cover 153. The main busbar 11 is provided with the fastening hole 111 to enable the fixing protrusion 151b of the stacking member 151 to be inserted and fixed thereto. Also, a protruding end 153c is further provided on the stacking cover 153.

The protruding end 153c is configured to protrude from the upper end of the stacking cover 153 toward the busbar stacking connector 13, and is to be seated in a recessed groove 133f, to be described later, of the busbar stacking connector 13.

The recessed groove 133f is configured to be recessed to a predetermined depth on the side where the main busbar 11 is inserted into the upper end of the connector body 133, and enables the protruding end 153c to be inserted into and closely contacted with the recessed groove 133f. Therefore, the busbar fixing module 15' may maintain a close contact with the busbar stacking connector 13, thereby effectively preventing the main busbar 11 from being separated from the busbar stacking connector 13.

## Claims

1. A modular panelboard, the modular panelboard comprising:
a busbar part (1) in which a plurality of main busbars (11) for supplying power of respective phases are stacked vertically,
wherein the busbar part (1) comprises a busbar stacking connector (13) connected to a main circuit breaker (M) so that the power of respective phases passing through the main circuit breaker (M) is transmitted to the main busbars (11) stacked vertically, and the busbar stacking connector (13) compresses and fixes the main busbars (11) inserted therein by elasticity, and
a connective connector (3) configured to provide a plurality of spaces in which the main busbars (11) of respective phases are inserted, and to bring branch busbars (33) into contact with the main busbars (11) inserted in the spaces, thereby connecting the main busbars (11) to individual circuit breakers (T),
wherein the connective connector (3) comprises:
a connecting main body (31) formed of an insulator and enabling the main busbars (11) for supplying the power of respective phases to be inserted into the plurality of spaces spaced apart at regular intervals;
the branch busbars (33) inserted in and fixed to the connecting main body, each of the branch busbars (33) being exposed at an end thereof to an associated one of the spaces in which an associated main busbar (11) is inserted to be in contact with the branch busbar (33), and connected at an opposite end thereof to the individual circuit breaker (T);
**characterized in that** the connective connector (3) further comprises:
a fixing rib (35) provided by facing the branch busbar to press and fix the associated main busbar inserted in the space, wherein
the fixing rib (35) comprises:
a rounded bent part (351) bent to protrude round upward from a point; and
an open bent part (353) provided by being bent upward from an end at which the associated main busbar is inserted, and
the connecting main body comprises a fixing stopper (313) that protrudes inwards to block a rising of the open bent part (353) when inserting the main busbar (11), thus increasing a pressing or fixing force on the main busbar (11).

2. **The** modular panelboard of claim 1, wherein the busbar stacking connector (13) comprises:
busbar stacking bars connected to the power of respective phases passing through the main circuit breaker (M) and lined up in a vertical direction; and
a connector body (133) providing an outer shape of the busbar stacking connector (13) and accommodating the busbar stacking bars therein, wherein the busbar stacking bars comprise:
connecting plates (131a) provided in respective layers in horizontal directions and configured to be in contact with the main busbars (11);
bent members (131b) connecting the connecting plates (131a) to the power of respective phases of the main circuit breaker (M); and
busbar fixing ribs (131c) pressing and fixing the main busbars (11) in contact with the connecting plates (131a) by elasticity, and the bent members (131b) connected to the power of respective phases have different heights so as to protrude from the connector body (133), the bent members (131b) being spaced apart from each other in a horizontal direction at a same height and connected to different points of the connecting plates (131a).

3. The modular panelboard of claim 2, wherein the connector body (133) comprises:
protrusion holes (133a) through which the bent members (131b) protrude toward the main circuit breaker (M);
insertion holes through which the main busbars (11) are inserted in the connector body (133); and
a vent part (133d) formed through the connector body (133) to discharge heat from the connector body (133) to an outside and to block inflow of dust.

4. The modular panelboard of claim 1, wherein the busbar part comprises busbar fixing modules provided at ends of the main busbars stacked vertically to fix the main busbars (11), and the busbar fixing modules comprise:
stacking members (151) in which the main busbars (11) stacked vertically are seated and fixed, the stacking members (151) being stacked vertically by the number of main busbars (11); and
a stacking cover (153) covering an uppermost stacking member, at an upper side, among the stacking members (151) stacked vertically.

5. The modular panelboard of claim 4, wherein each of the stacking members (151) comprises:
a seating groove (151a) recessed downward so that an associated main busbar is seated therein;
a fixing protrusion protruding upward from a point on the seating groove (151a) and being inserted into a fastening hole of the main busbar;
a coupling protrusion protruding upward from each of both ends of the stacking member;
an insertion groove (153a) into which an engaging protrusion of the stacking member at a lower side is inserted; and
a through-hole formed through the coupling protrusion and the insertion groove (153a) so that a fixing means is fastened thereto.

6. The modular panelboard of claim 4, wherein the busbar fixing modules are additionally provided in close contact with the busbar stacking connector.

7. The modular panelboard of claim 6, wherein the stacking cover (153) comprises a protruding end protruding from a top end of the stacking cover toward the busbar stacking connector, and the busbar stacking connector is provided at a top end thereof with a recessed groove in which the protruding end is closely seated.

8. The modular panelboard of claim 1, wherein the connecting main body (31) comprises a vent part (315) configured to discharge heat from the connecting main body (31) to an outside and to block inflow of dust.

9. The modular panelboard of claim 3, wherein the vent part (133d) comprises:
a vent hole (133d-1, 315a) formed through a side wall of the connector body (133) or the connecting main body (31);
a blocking plate (133d-2, 315b) provided to face the vent hole (133d-1, 315a) inside the connector body (133) or the connecting main body (31) so as to block the vent hole (133d-1, 315a); and
an inner groove (133d-3, 315c) recessed to a predetermined depth from an inside of the connector body (133) or the connecting main body (31) to an outside, and provided to communicate with the vent hole (133d-1, 315a) at an upper side or a lower side of the vent hole (133d-1, 315a).

## Patentansprüche

1. Modularer Verteilerkasten, wobei der modulare Verteilerkasten Folgendes umfasst: einen Sammelschienenteil (1), in dem eine Vielzahl von Hauptsammelschienen (11) zum Zuführen von Leistung der jeweiligen Phasen vertikal gestapelt sind,
wobei der Sammelschienenteil (1) einen Sammelschienen-Stapelverbinder (13) umfasst, der mit einem Hauptleistungsschalter (M) verbunden ist, sodass die Leistung der jeweiligen Phasen, die durch den Hauptleistungsschalter (M) verläuft, auf die vertikal gestapelten Hauptsammelschienen (11) übertragen wird, und wobei der Sammelschienen-Stapelverbinder (13) die darin eingeführten Hauptsammelschienen (11) durch Elastizität zusammenpresst und fixiert, und
einen Verbindungsverbinder (3), der dazu konfiguriert ist, eine Vielzahl von Zwischenräumen bereitzustellen, in die die Hauptsammelschienen (11) der jeweiligen Phasen eingeführt werden, und Zweigsammelschienen (33) mit den in die Zwischenräume eingeführten Hauptsammelschienen (11) in Kontakt zu bringen, wodurch die Hauptsammelschienen (11) mit einzelnen Leistungsschaltern (T) verbunden werden,
wobei der Verbindungsverbinder (3) Folgendes umfasst:
einen verbindenden Hauptkörper (31), der aus einem Isolator besteht und es ermöglicht, die Hauptsammelschienen (11) zum Zuführen der Leistung der jeweiligen Phasen in die Vielzahl der in regelmäßigen Abständen beabstandeten Zwischenräume einzuführen;
wobei die Zweigsammelschienen (33) in den verbindenden Hauptkörper eingefügt und an diesem fixiert sind, wobei jede der Zweigsammelschienen (33) an einem Ende davon zu einem zugeordneten der Zwischenräume freiliegt, in den eine zugeordnete Hauptsammelschiene (11) eingeführt ist, um mit der Zweigsammelschiene (33) in Kontakt zu stehen, und an dem gegenüberliegenden Ende davon mit dem einzelnen Leistungsschalter (T) verbunden ist;
**dadurch gekennzeichnet, dass** der Verbindungsverbinder (3) ferner Folgendes umfasst:
eine Fixierrippe (35), die gegenüber der Zweigsammelschiene bereitgestellt ist, um die in den Zwischenraum eingeführte zugeordnete Hauptsammelschiene anzudrücken und zu fixieren, wobei
die Fixierrippe (35) Folgendes umfasst:
einen abgerundeten gebogenen Teil (351), der gebogen ist, um von einem Punkt aus rund nach oben vorzustehen; und
einen offenen gebogenen Teil (353), der durch Aufwärtsbiegen von einem Ende, an dem die zugeordnete Hauptsammelschiene eingeführt ist, bereitgestellt wird, und
wobei der verbindende Hauptkörper einen Befestigungsanschlag (313) umfasst, der nach innen vorsteht, um ein Anheben des offenen gebogenen Teils (353) beim Einführen der Hauptsammelschiene (11) zu blockieren, wodurch eine Druck- oder Fixierkraft auf die Hauptsammelschiene (11) erhöht wird.

2. Modularer Verteilerkasten nach Anspruch 1, wobei der Sammelschienen-Stapelverbinder (13) Folgendes umfasst:
Sammelschienen-Stapelstangen, die an die Leistung der jeweiligen Phasen verbunden sind, die durch den Hauptleistungsschalter (M) verläuft, und in vertikaler Richtung aufgereiht sind; und
einen Verbinderkörper (133), der eine Außenform des Sammelschienen-Stapelverbinders (13) bildet und die Sammelschienen-Stapelstangen darin aufnimmt, wobei die Sammelschienen-Stapelstangen Folgendes umfassen:
Verbindungsplatten (131a), die in jeweiligen Schichten in horizontalen Richtungen bereitgestellt werden und dazu konfiguriert sind, mit den Hauptsammelschienen (11) in Kontakt zu stehen;
gebogene Elemente (131b), die die Verbindungsplatten (131a) mit der Leistung der jeweiligen Phasen des Hauptleistungsschalters (M) verbinden; und
Sammelschienen-Fixierrippen (131c), die die Hauptsammelschienen (11) durch Elastizität in Kontakt mit den Verbindungsplatten (131a) drücken und fixieren, und wobei die mit der Leistung der jeweiligen Phasen verbundenen gebogenen Elemente (131b) unterschiedliche Höhen aufweisen, sodass sie vom Verbinderkörper (133) vorstehen, wobei die gebogenen Elemente (131b) in einer horizontalen Richtung in gleicher Höhe voneinander beabstandet und mit verschiedenen Punkten der Verbindungsplatten (131a) verbunden sind.

3. Modularer Verteilerkasten nach Anspruch 2, wobei der Verbinderkörper (133) Folgendes umfasst:
Vorsprungslöcher (133a), durch die die gebogenen Elemente (131b) zum Hauptleistungsschalter (M) hin vorstehen;
Einführungslöcher, durch die die Hauptsammelschienen (11) in den Verbinderkörper (133) eingeführt werden; und
einen Entlüftungsteil (133d), der durch den Verbinderkörper (133) hindurchgebildet ist, um Wärme aus dem Verbinderkörper (133) nach außen abzuleiten und das Einströmen von Staub zu blockieren.

4. Modularer Verteilerkasten nach Anspruch 1, wobei der Sammelschienenteil Sammelschienenfixiermodule umfasst, die an den Enden der vertikal gestapelten Hauptsammelschienen bereitgestellt sind, um die Hauptsammelschienen (11) zu fixieren, und wobei die Sammelschienenfixiermodule Folgendes umfassen:
Stapelelemente (151), in denen die vertikal gestapelten Hauptsammelschienen (11) sitzen und fixiert sind, wobei die Stapelelemente (151) vertikal um die Anzahl der Hauptsammelschienen (11) gestapelt sind; und
eine Stapelabdeckung (153), die ein oberstes Stapelelement an einer Oberseite unter den vertikal gestapelten Stapelelementen (151) abdeckt.

5. Modularer Verteilerkasten nach Anspruch 4, wobei jedes der Stapelelemente (151) Folgendes umfasst:
eine Sitznut (151a), die nach unten ausgespart ist, sodass eine zugeordnete Hauptsammelschiene darin sitzt;
einen Fixiervorsprung, der von einem Punkt an der Sitznut (151a) nach oben vorsteht und in ein Befestigungsloch der Hauptsammelschiene eingeführt wird;
einen Kupplungsvorsprung, der von jedem der beiden Enden des Stapelelements nach oben vorsteht;
eine Einführnut (153a), in die ein Eingriffsvorsprung des Stapelelements an einer Unterseite eingeführt wird; und
ein Durchgangsloch, das durch den Kupplungsvorsprung und die Einführnut (153a) gebildet ist, so dass ein Fixiermittel daran befestigt ist.

6. Modularer Verteilerkasten nach Anspruch 4, wobei die SammelschienenFixiermodule zusätzlich in engem Kontakt mit dem Sammelschienen-Stapelverbinder bereitgestellt werden.

7. Modularer Verteilerkasten nach Anspruch 6, wobei die Stapelabdeckung (153) ein vorstehendes Ende umfasst, das von einem oberen Ende der Stapelabdeckung zum Sammelschienen-Stapelverbinder hin vorsteht, und der Sammelschienen-Stapelverbinder an einem oberen Ende davon mit einer ausgesparten Nut bereitgestellt ist, in der das vorstehende Ende fest sitzt.

8. Modularer Verteilerkasten nach Anspruch 1, wobei der verbindende Hauptkörper (31) ein Entlüftungsteil (315) umfasst, das dazu konfiguriert ist, Wärme aus dem verbindenden Hauptkörper (31) nach außen abzuleiten und das Einströmen von Staub zu blockieren.

9. Modularer Verteilerkasten nach Anspruch 3, wobei der Entlüftungsteil (133d) Folgendes umfasst:
eine Entlüftungsöffnung (133d-1, 315a), die durch eine Seitenwand des Verbinderkörpers (133) oder des verbindenden Hauptkörpers (31) gebildet ist;
eine Blockierplatte (133d-2, 315b), die bereitgestellt wird, um der Entlüftungsöffnung (133d-1, 315a) innerhalb des Verbinderkörpers (133) oder des verbindenden Hauptkörpers (31) gegenüberzuliegen, um die Entlüftungsöffnung (133d-1, 315a) zu blockieren; und
eine Innennut (133d-3, 315c), die von einem Inneren des Verbinderkörpers (133) oder des verbindenden Hauptkörpers (31) nach außen bis zu einer vorbestimmten Tiefe ausgespart ist und dazu vorgesehen ist, mit der Entlüftungsöffnung (133d-1, 315a) an einer Oberseite oder einer Unterseite der Entlüftungsöffnung (133d-1, 315a) in Verbindung zu stehen.

## Revendications

1. Tableau modulaire, le tableau modulaire comprenant : une partie de barres omnibus (1) dans laquelle sont empilées verticalement une pluralité de barres omnibus principales (11) pour l'alimentation de phases respectives ;
dans lequel la partie de barres omnibus (1) comprend un connecteur d'empilement de barres omnibus (13) connecté à un disjoncteur principal (M) de sorte que l'alimentation des phases respectives traversant le disjoncteur principal (M) est transmise aux barres omnibus principales (11) empilées verticalement, et le connecteur d'empilement de barres omnibus (13) presse et fixe par élasticité les barres omnibus principales (11) insérées dans celui-ci, et
un connecteur de liaison (3) configuré pour fournir une pluralité d'espaces dans lesquels sont insérées les barres omnibus principales (11) des phases respectives, et pour amener les barres omnibus de dérivation (33) en contact avec les barres omnibus principales (11) insérées dans les espaces, connectant ainsi les barres omnibus principales (11) à des disjoncteurs individuels (T),
dans lequel le connecteur de liaison (3) comprend :
un corps principal de connexion (31) formé d'un isolant et permettant d'insérer les barres omnibus principales (11) pour l'alimentation des phases respectives dans la pluralité d'espaces espacés à intervalles réguliers ;
les barres omnibus de dérivation (33) insérées dans et fixées au corps principal de connexion, chacune des barres omnibus de dérivation (33) étant exposée au niveau d'une de ses extrémités à l'un des espaces associés dans lequel une barre omnibus principale (11) associée est insérée afin d'être en contact avec la barre omnibus de dérivation (33), et étant connectée au niveau d'une de ses extrémités opposées au disjoncteur individuel (T) ;
**caractérisé en ce que** le connecteur de liaison (3) comprend en outre :
une nervure de fixation (35) fournie en regard de la barre omnibus de dérivation afin de presser et fixer la barre omnibus principale associée insérée dans l'espace, dans lequel
la nervure de fixation (35) comprend :
une partie courbée arrondie (351) courbée pour faire saillie vers le haut en arrondie à partir d'un point ; et
une partie courbée ouverte (353) fournie courbée vers le haut à partir d'une extrémité au niveau de laquelle la barre omnibus principale associée est insérée, et
le corps principal de connexion comprend une butée de fixation (313) qui fait saillie vers l'intérieur pour bloquer une montée de la partie courbée ouverte (353) lors de l'insertion de la barre omnibus principale (11), augmentant ainsi une force de pression ou de fixation sur la barre omnibus principale (11).

2. Tableau modulaire selon la revendication 1, dans lequel le connecteur d'empilement de barres omnibus (13) comprend :
des barres d'empilement de barres omnibus connectées à l'alimentation des phases respectives traversant le disjoncteur principal (M) et alignées dans une direction verticale ; et
un corps de connecteur (133) fournissant une forme extérieure du connecteur d'empilement de barres omnibus (13) et logeant les barres d'empilement de barres omnibus dans celui-ci, dans lequel les barres d'empilement de barres omnibus comprennent :
des plaques de connexion (131a) fournies en couches respectives dans des directions horizontales et configurées pour être en contact avec les barres omnibus principales (11) ;
des éléments courbés (131b) connectant les plaques de connexion (131a) à l'alimentation des phases respectives du disjoncteur principal (M) ; et
des nervures de fixation de barres omnibus (131c) pressant et fixant par élasticité les barres omnibus principales (11) en contact avec les plaques de connexion (131a), et les éléments courbés (131b) connectés à l'alimentation des phases respective ont des hauteurs différentes de sorte à faire saillie hors du corps de connecteur (133), les éléments courbés (131b) sont espacés les uns des autres dans une direction horizontale à la même hauteur et connectés à différents points des plaques de connexion (131a).

3. Tableau modulaire selon la revendication 2, dans lequel le corps de connecteur (133) comprend :
des orifices de saillie (133a) à travers lesquels les éléments courbés (131b) font saillie vers le disjoncteur principal (M) ;
des orifices d'insertion à travers lesquels les barres omnibus principales (11) sont insérées dans le corps de connecteur (133) ; et
une partie d'évent (133d) formée à travers le corps de connecteur (133) pour évacuer la chaleur du corps de connecteur (133) vers un extérieur et pour bloquer l'entrée de poussière.

4. Tableau modulaire selon la revendication 1, dans lequel la partie de barres omnibus comprend des modules de fixation de barres omnibus fournis au niveau des extrémités des barres omnibus principales empilées verticalement pour fixer les barres omnibus principales (11), et les modules de fixation de barres omnibus comprennent :
des éléments d'empilement (151) dans lesquels les barres omnibus principales (11) empilées verticalement sont logées et fixées, les éléments d'empilement (151) étant empilés verticalement en fonction du nombre de barres omnibus principales (11) ; et
un couvercle d'empilement (153) recouvrant un élément d'empilement supérieur, au niveau d'un côté supérieur, parmi les éléments d'empilement (151) empilés verticalement.

5. Tableau modulaire selon la revendication 4, dans lequel chacun des éléments d'empilement (151) comprend :
une rainure de logement (151a) formée en retrait vers le bas de sorte qu'une barre omnibus principale associée soit logée dans celle-ci ;
une saillie de fixation faisant saillie vers le haut à partir d'un point sur la rainure de logement (151a) et étant insérée dans un orifice de fixation de la barre omnibus principale ;
une saillie d'accouplement faisant saillie vers le haut à partir de chacune des deux extrémités de l'élément d'empilement ;
une rainure d'insertion (153a) dans laquelle est insérée une saillie d'engagement de l'élément d'empilement au niveau du côté inférieur ; et
un trou traversant formé à travers la saillie d'accouplement et la rainure d'insertion (153a) de sorte qu'un moyen de fixation soit attaché à celui-ci.

6. Tableau modulaire selon la revendication 4, dans lequel les modules de fixation des barres omnibus sont en outre fournis en contact étroit avec le connecteur d'empilement de barres omnibus.

7. Tableau modulaire selon la revendication 6, dans lequel le couvercle d'empilement (153) comprend une extrémité en saillie faisant saillie depuis une extrémité supérieure du couvercle d'empilement vers le connecteur d'empilement de barres omnibus, et le connecteur d'empilement de barres omnibus est pourvu, au niveau de son extrémité supérieure, d'une rainure en retrait dans laquelle l'extrémité en saillie est étroitement logée.

8. Tableau modulaire selon la revendication 1, dans lequel le corps principal de connexion (31) comprend une partie d'évent (315) configurée pour évacuer la chaleur du corps principal de connexion (31) vers un extérieur et pour bloquer l'entrée de poussière.

9. Tableau modulaire selon la revendication 3, dans lequel la partie d'évent (133d) comprend :
un orifice d'évent (133d-1, 315a) formé à travers une paroi latérale du corps de connecteur (133) ou du corps principal de connexion (31) ;
une plaque de blocage (133d-2,315b) fournie en regard de l'orifice d'évent (133d-1, 315a) à l'intérieur du corps de connecteur (133) ou du corps principal de connexion (31) de sorte à bloquer l'orifice d'évent (133d-1, 315a) ; et
une rainure intérieure (133d-3,315c) en retrait à une profondeur prédéterminée depuis un intérieur du corps de connecteur (133) ou du corps principal de connexion (31) vers un extérieur, et fournie pour communiquer avec l'orifice d'évent (133d-1,315a) au niveau d'un côté supérieur ou d'un côté inférieur de l'orifice d'évent (133d-1,315a).
